# EUROPÄISCHE PATENTANMELDUNG

(11) **EP 3 623 689 A1**
(43) Veröffentlichungstag der Anmeldung: **18.03.2020**
(21) Anmeldenummer: 19196093.9
(22) Anmeldetag: 09.09.2019
(51) Int. Cl.: F17C 13/08

(54) **SPEICHERANORDNUNG FÜR EIN FAHRZEUG ZUM SPEICHERN UND ABGEBEN EINES DRUCKGASES SOWIE FAHRZEUG MIT EINER SOLCHEN SPEICHERANORDNUNG**

(30) Priorität: 11.09.2018 DE 102018215447
(71) Anmelder: Audi AG, 85045 Ingolstadt (DE)
(72) Erfinder: ALBL, Sebastian, 85080 Gaimersheim (DE)

(57) **Zusammenfassung**

Die Erfindung betrifft eine Speicheranordnung (1) für ein Fahrzeug (10) zum Speichern und Abgeben eines Druckgases mit einem ersten Druckgasspeicher (2.1) mit einem mäanderförmig verlaufenden Rohrspeicher (2.10), welcher aus miteinander fluidverbundenen zylindrischen Rohrspeichern (2.11) gebildet ist, , einem zweiten Druckgasspeicher (2.2) mit wenigstens einem zylindrischen Drucktank (2.20), einem Gehäuse (3), innerhalb welchem der erste Druckgasspeicher (2.1) angeordnet ist, und wenigstens einem Verbindungsmittel (4), mit welchem der zweite Druckgasspeicher (2.2) mit dem Gehäuse (3) kraftschlüssig verbunden ist. Die Erfindung betrifft ferner ein Fahrzeug (10) mit einer erfindungsgemäßen Speicheranordnung (1).

## Beschreibung

Die Erfindung betrifft eine Speicheranordnung für ein Fahrzeug zum Speichern und Abgeben eines Druckgases sowie ein Fahrzeug mit einer solchen Speicheranordnung.

Drucktanks werden in Fahrzeugen, wie Brennstoffzellenfahrzeugen oder CNG(Erdgas)-Fahrzeugen als Speicher für gasförmige Brennstoffe wie Wasserstoff oder Erdgas eingesetzt.

Solche Drucktanks sind flaschenförmig ausgebildet und haben einen vergleichsweise großen Durchmesser im Verhältnis zu ihrer Länge und werden in bestehende Strukturen des Fahrzeugs, insbesondere in bestehende Bauräume, wie bspw. im Hinterwagen, im Tunnel und/oder unter der zweiten Sitzreiche des Fahrzeugs angeordnet. Dies führt jedoch in nachteiliger Weise zu großen Einschränkungen im Kofferraum und im Fahrgastraum.

Daher werden Druckgasspeicher in Form eines sogenannten mäanderförmig verlaufenden Rohrspeichers mit mehreren parallel angeordneten Rohrspeicherabschnitten, die flaschenförmig mit einem kleinen Durchmesser im Verhältnis zur Länge ausgeführt sind, eingesetzt, wie dies bspw. aus der US 4,932,403 B oder der US 9,217,538 B2 bekannt ist.

Ein solcher mäanderförmig verlaufender Rohrspeicher ist aus der DE 10 2013 002 944 A1 bekannt und besteht aus parallel angeordneten und geraden Rohrspeicherabschnitten, die über bogenförmige Abschnitte verbunden sind, wobei der Innendurchmesser des Rohrspeichers im Bereich dieser bogenförmigen Abschnitte gegenüber dem Innendurchmesser der geraden Rohrspeicherabschnitte verringert ist.

Dieser bekannte Rohrspeicher gemäß der DE 10 2013 002 944 A1 wird aus bspw. auf einem aus Wachs oder aufgeschäumten Polystyrol hergestellter Kern aufgewickelten Verstärkungsfasern und einer Kunststoffmatrix aufgebaut und nach einer Faltung in die mäanderförmige Form ausgehärtet.
Ein Brennstoffzellenfahrzeug gemäß der DE 10 2013 015 514 A1 umfasst neben einem Brennstoffzellensystem eine Vorrichtung zum Speichern von Energie mit einem Druckgasspeicher und einem elektrischen Energiespeicher. Dieser Druckgasspeicher ist in Form eines mäanderförmig verlegten Rohrspeichers ausgebildet. Solche Rohrspeicher weisen typischerweise eine sehr viel größere Länge auf im Vergleich zu deren maximalen Durchmesser.

Bei einem Brennstoffzellenfahrzeug gemäß der WO 2004/030969 A1 ist ein Brennstoffzellensystem in einem unter einem Vordersitz des Fahrzeugs liegenden Ausschnitt eines Fahrzeugunterbodens angeordnet, während eine Batterie im Bereich eines vor einem Fahrzeugrücksitz sich befindenden Fußraum angeordnet ist und sich hieran rückseitig und beginnend unter dem Rücksitz ein Wasserstoffspeicher anschließt.

Die DE 10 2014 008 480 A1 der Anmelderin beschreibt ein Brennstoffzellenfahrzeug mit einer Traktionsbatterie und einem Wasserstoffspeicher, wobei mindestens ein Teil des Wasserstoffspeichers und mindestens ein Teil der Traktionsbatterie in einer baulichen Einheit zusammengefasst und an einem Unterboden, nämlich in einem Mitteltunnel des Fahrzeugs angeordnet sind.

Schließlich ist aus der DE 10 2017 117 151 A1 ein Erdgas-Fahrzeug mit einem Druckgasspeicher bekannt, bei welchem in einem T-förmigen Gehäuse ein mäanderförmig verlegter Rohrspeicher angeordnet ist. Die zylindrischen Rohrspeicherabschnitte weisen ein Seitenverhältnis der Länge zum Durchmesser von größer als 10 auf und sind daher im Vergleich zum Durchmesser wesentlich länger.

Es ist Aufgabe der Erfindung eine Speicheranordnung für ein Fahrzeug zum Speichern und Abgeben eines Druckgases anzugeben, welches als Zusammenbauteil herstellbar und damit einfach im Fahrzeug verbaubar ist sowie flexibel an vorhandene Bauräume im Fahrzeug angepasst werden kann. Ferner ist es Aufgabe der Erfindung ein Fahrzeug mit einer erfindungsgemäßen Speicheranordnung anzugeben.

Die erstgenannte Aufgabe wird gelöst durch eine Speicheranordnung mit den Merkmalen des Patentanspruches 1.

Eine solche Speicheranordnung für ein Fahrzeug zum Speichern und Abgeben eines Druckgases zeichnet sich erfindungsgemäß aus durch:
- einen ersten Druckgasspeicher mit einem mäanderförmig verlaufenden Rohrspeicher, welcher aus miteinander fluidverbundenen zylindrischen Rohrspeicherabschnitten gebildet ist, ,
- einen zweiten Druckgasspeicher mit wenigstens einem zylindrischen Drucktank,
- ein Gehäuse, innerhalb welchem der erste Druckgasspeicher angeordnet ist, und
- wenigstens ein Verbindungsmittel, mit welchem der zweite Druckgasspeicher mit dem Gehäuse kraftschlüssig verbunden ist.

Bei einer solchen Speicheranordnung wird ein flachbauender mäanderförmig verlaufender Rohrspeicher als erster Druckgasspeicher mit einem zweiten Druckgasspeicher zu einer Baueinheit zusammengefasst, bei welcher der zylindrische Drucktank des zweiten Druckgasspeichers einen wesentlich größeren Durchmesser als die geraden Rohrspeicherabschnitte des ersten Druckgasspeichers bezogen auf deren Länge aufweist. Damit kann eine solche Speicheranordnung derart in ein Fahrzeug verbaut werden, dass der erste Druckgasspeicher flache Bauräume ausfüllt, die in Fahrzeughochrichtung (z-Richtung) eine geringe Höhe aufweisen, während der zweite Druckgasspeicher Bauräume mit hoher z-Höhe im Vergleich zum ersten Druckgasspeicher ausfüllt.

Eine solche erfindungsgemäße Speicheranordnung kann von einem Lieferant als Zusammenbauteil an ein Montageband des Fahrzeugherstellers geliefert werden, wobei der Lieferant den mäanderförmigen Rohrspeicher vorteilhaft in einer standardisierten Breite und Höhe fertigen kann - und diesen nicht für einen Bauraum unterhalb einer Rücksitzanlage des Fahrzeugs in Fahrzeugquerrichtung (y-Richtung) kürzer ausführen muss und in Fahrzeughochrichtung (z-Richtung) mit mehr als zwei Lagen übereinander "stapeln" muss. Dies vereinfacht den Fertigungsprozess seitens des Lieferanten. Für den Bauraum unterhalb der Rücksitzanlage wird daher wenigstens ein konventioneller zylindrischer Drucktank als zweiter Druckgasspeicher verwendet. Der mäanderförmige Rohrspeicher als erster Druckgasspeicher ist damit weniger komplex und es können in einer vorgegebenen Zeit wesentlich höhere Stückzahlen solcher erfindungsgemäßen Speicheranordnungen gefertigt werden.

Ein weiterer Vorteil einer solchen erfindungsgemäßen Speicheranordnung als Zusammenbauteil besteht darin, dass dieses mit geringem Aufwand im Fahrzeug montiert werden kann. Ferner kann vor der Montage im Fahrzeug die Speicheranordnung einer Sicherheits- und Druckprüfung, bspw. durch den Lieferanten einer solchen Speicheranordnung unterzogen werden.

Nach einer bevorzugten Ausgestaltung der Erfindung sind die Rohrspeicherabschnitte des Rohrspeichers in wenigstens einer ersten Lage mit parallel verlaufenden Längsachsen ausgerichtet, wobei der zylindrische Drucktank des zweiten Druckgasspeichers benachbart zu dem Rohrspeicher des ersten Druckgasspeichers in dessen ersten Lage angeordnet ist. Damit ergibt sich im in ein Fahrzeug eingebauten Zustand der Speicheranordnung im Bereich des ersten Druckgasspeichers in Fahrzeughochrichtung (z-Richtung) eine geringere Einbauhöhe als im Bereich des zweiten Druckgasspeichers.

Eine besonders vorteilhafte Ausgestaltung der Erfindung sieht vor, dass
- das Gehäuse mindestens in einen ersten und zweiten Gehäuseabschnitt zweigeteilt ist,
- zur Anordnung des ersten Druckgasspeichers in dem ersten Gehäuseabschnitt derselbe mit einem dem Volumen des ersten Druckgasspeichers entsprechenden Bauraumvolumen ausgebildet ist,
- der zweite Gehäuseabschnitt mit einem Bauraumvolumen ausgebildet ist, welches höchstens einem Teilvolumen des Volumens des zylindrischen Drucktanks des zweiten Druckgasspeichers entspricht, und
- der zylindrische Drucktank des zweiten Druckgasspeichers mit dessen Teilvolumen in dem zweiten Gehäuseabschnitt angeordnet ist.

Ein solches Gehäuse der erfindungsgemäßen Speicheranordnung ist jeweils optimal an die Bauform des ersten und des zweiten Druckgasspeichers angepasst. Hierzu weist der erste Gehäuseabschnitt des Gehäuses ein Bauraumvolumen auf, welches dem Volumen des ersten Druckgasspeichers entspricht, so dass dieser vollständig von diesem Bauraumabschnitt aufgenommen werden kann. Der zweite Gehäuseabschnitt bietet lediglich eine Stützstruktur, über welche der zylindrische Drucktank des zweiten Druckgasspeichers mit dem Gehäuse verbunden wird. Hierzu wird als Bauraum von dem zweiten Gehäuseabschnitt lediglich ein Volumen bereitgestellt, welches einem Teilvolumen des zylindrischen Drucktanks entspricht. Ein solches Gehäuse der erfindungsgemäßen Speicheranordnung bietet ausreichend Flexibilität zur Anpassung an einen gegebenen Bauraum im Fahrzeug.

Vorzugsweise weist das Gehäuse einen mit Profilen gebildeten Trägerrahmen auf. Ein solcher mit Profilen aufgebauter Trägerrahmen ist konstruktiv einfach und kostengünstig herstellbar.

Nach einer weiteren vorteilhaften Ausgestaltung der Erfindung sind die Verbindungsmittel ausgebildet, den zylindrischen Drucktank des zweiten Druckgasspeichers mit dem Gehäuse im Bereich des zweiten Gehäuseabschnittes kraftschlüssig zu verbinden. Damit kann in konstruktiv einfacher Weise der zweite Druckgasspeicher mit dem Gehäuse kraftschlüssig verbunden werden.

Besonders vorteilhaft ist es, wenn weiterbildungsgemäß das Gehäuse im Bereich des ersten Gehäuseabschnittes eine der äußeren Kontur des ersten Druckgasspeichers entsprechende geometrische Körperform aufweist. Aufgrund der flachen und quaderförmigen äußeren Kontur des ersten Druckgasspeichers wird auch der erste Gehäuseabschnitt des Gehäuses in dieser Geometrie realisiert und lässt sich damit an entsprechende flache Bauräume, wie zum Beispiel im Unterflur-Raum des Fahrzeugs optimal anpassen.

Vorzugsweise ist die Speicheranordnung derart ausgebildet, dass
- der Rohrspeicher des ersten Druckgasspeichers ein Ventil aufweist,
- der wenigstens eine Drucktank des zweiten Druckgasspeichers ein Ventil aufweist, und
- das Ventil des Rohrspeichers mittels eines Verbindungsmittels mit dem Ventil des wenigstens einen Drucktanks fluidverbunden ist.

Anstelle der Anordnung des zweiten Druckgasspeichers in der Ebene der ersten Lage des mäanderförmig verlaufenden Rohrspeichers des zweiten Druckgasspeichers sieht eine andere Weiterbildung der Erfindung vor, dass der zweite Druckgasspeicher benachbart zu den Rohrspeichern derart angeordnet ist, dass die äußere Kontur der Speicheranordnung eine L-Form ist. Damit kann ein besonders hoher Bauraum in Fahrzeughochrichtung (z-Richtung) des Fahrzeugs im Bereich des zweiten Druckgasspeichers genutzt werden, in welchem sich die Bauhöhe der Speicheranordnung aus der Bauhöhe des ersten Druckgasspeichers und des zweiten Druckgasspeichers zusammensetzt. Wird wenigstens ein weiterer zylindrischer Drucktank für den zweiten Druckgasspeicher angesetzt, welcher sich benachbart zum ersten Druckgasspeicher und benachbart zum ersten zylindrischen Drucktank befindet, ergibt sich eine quaderförmige Form der erfindungsgemäßen Speicheranordnung.

Bei dieser Weiterbildung der erfindungsgemäßen Speicheranordnung ist es vorgesehen, dass
- zur Anordnung des ersten Druckgasspeichers in dem Gehäuse das Gehäuse mit einem dem Volumen des ersten Druckgasspeichers entsprechenden Bauraumvolumen ausgebildet ist, und
- die Verbindungsmittel ausgebildet sind, den zylindrischen Drucktank des zweiten Druckgasspeichers mit dem Gehäuse zu verbinden.

Werden zwei zylindrische Drucktanks als zweiter Druckgasspeicher bspw. für ein Fahrzeug mit einem Vorderachsantrieb eingesetzt, befinden sich diese beiden Drucktanks in einem Bereich, in welchem ein Hinterachsantrieb verbaut würde, , wobei der mäanderförmig verlaufende Rohrspeicher als erster Druckgasspeicher in Fahrzeughochrichtung oberhalb der beiden Drucktanks liegt.

Auch bei diesen beiden zuletzt genannten Ausgestaltungen der erfindungsgemäßen Speicheranordnung weist das Gehäuse eine der äußeren Kontur des ersten Druckgasspeichers entsprechende geometrische Körperform auf, wobei das Gehäuse ebenso einen mit Profilen gebildeten Trägerrahmen aufweist.

Die zweitgenannte Aufgabe wird gelöst durch ein Fahrzeug mit den Merkmalen des Patentanspruchs 13 oder mit den Merkmalen des Patentanspruchs 15.

Bei einem Fahrzeug mit einem Unterflur-Raum und einer erfindungsgemäßen Speicheranordnung, bei welcher der zweite Druckgasspeicher in der Ebene der ersten Lage des mäanderförmig verlaufenden Rohrspeichers des zweiten Druckgasspeichers angeordnet ist, ist nach der erstgenannten Lösung die Speicheranordnung im Unterflur-Raum derart angeordnet, dass der erste Druckgasspeicher der Speicheranordnung von unterhalb des Fußraums von Vordersitzen des Fahrzeugs bis unterhalb des Fußraums einer Rücksitzanordnung, jedoch zumindest unterhalb des Fußraums der Rücksitzanordnung und der zweite Druckgasspeicher unterhalb der Rücksitzanordnung ist.

Bei einem Fahrzeug mit einer eine L-förmige äußere Kontur aufweisende Speicheranordnung ist nach der zweitgenannten Lösung die Speicheranordnung im Fahrzeug derart angeordnet, dass der Rohrspeicher des ersten Druckgasspeichers der Speicheranordnung oberhalb eines elektrischen Hinterachsantriebs des Fahrzeugs und der Drucktank des zweiten Druckgasspeichers hinter dem elektrischen Hinterachsantrieb ist. Ein solches Fahrzeug kann noch zusätzlich mit einem Vorderachsantrieb ausgestattet werden.
Bei einem Fahrzeug mit nur einem elektrischen Vorderachsantrieb ist anstelle des elektrischen Hinterachsantriebs ein weiterer Drucktank angeordnet, so dass die Speicheranordnung eine quaderförmige äußere Kontur annimmt. Bei einem solchen Fahrzeug mit Vorderachsantrieb wird ein größeres und damit leistungsstärkeres Brennstoffzellensystem eingesetzt.

Nach einer letzten vorteilhaften Ausgestaltung des erfindungsgemäßen Fahrzeugs sind die zylindrischen Rohrspeicherabschnitte des Rohrspeichers des ersten Druckgasspeichers mit ihrer Längsachse parallel zur Fahrzeugquerachse oder parallel zur Fahrzeuglängsachse angeordnet sind, während der wenigstens eine Drucktank des zweiten Druckgasspeichers mit seiner Längsachse in Fahrzeugquerrichtung angeordnet ist.

Weitere Vorteile, Merkmale und Einzelheiten der Erfindung ergeben sich aus der nachfolgenden Beschreibung bevorzugter Ausführungsformen sowie anhand der Zeichnungen. Dabei zeigen:
- Figur 1: eine schematische Darstellung einer Seitenansicht auf eine Speicheranordnung eines ersten Ausführungsbeispiels,
- Figur 2: eine schematische Darstellung einer Seitenansicht auf eine Speicheranordnung eines zweiten Ausführungsbeispiels,
- Figur 3: eine schematische Darstellung einer Speicheranordnung mit einem Gehäuse und einem ersten Druckgasspeicher,
- Figur 4: eine schematische Darstellung der Speicheranordnung nach Figur 3 mit einem ersten und zweiten Druckgasspeicher gemäß Figur 1,
- Figur 5: eine schematische Darstellung einer Seitenansicht eines Fahrzeugs mit einer Speicheranordnung gemäß Figur 4,
- Figur 6: eine schematische Darstellung einer Seitenansicht eines Fahrzeugs mit einer Speicheranordnung gemäß Figur 2,
- Figur 7: eine schematische Darstellung einer Seitenansicht eines Fahrzeugs mit einer Speicheranordnung gemäß Figur 4, und
- Figur 8: eine schematische Darstellung einer Seitenansicht eines Fahrzeugs mit einer Speicheranordnung gemäß Figur 2.

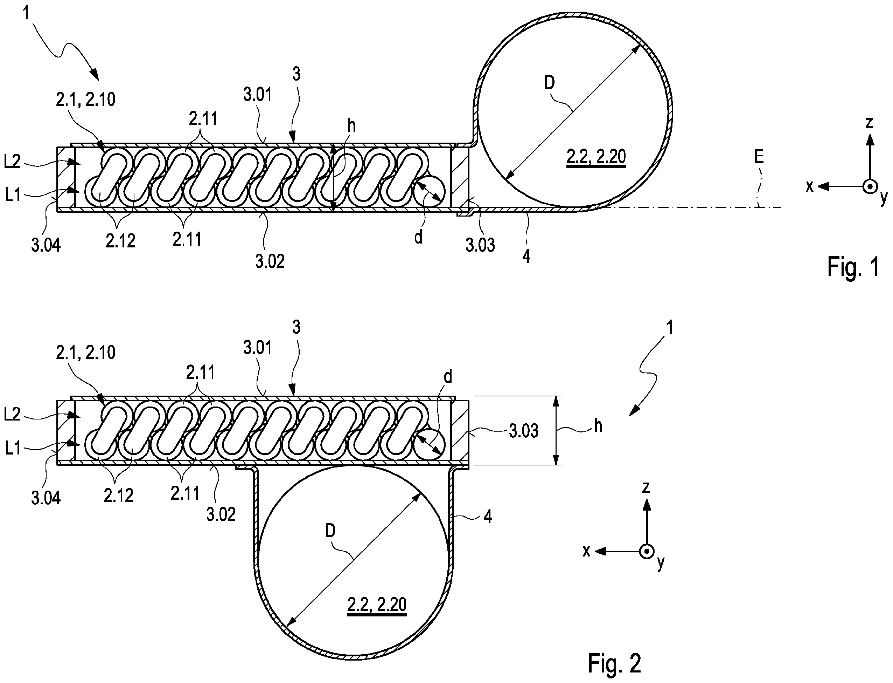

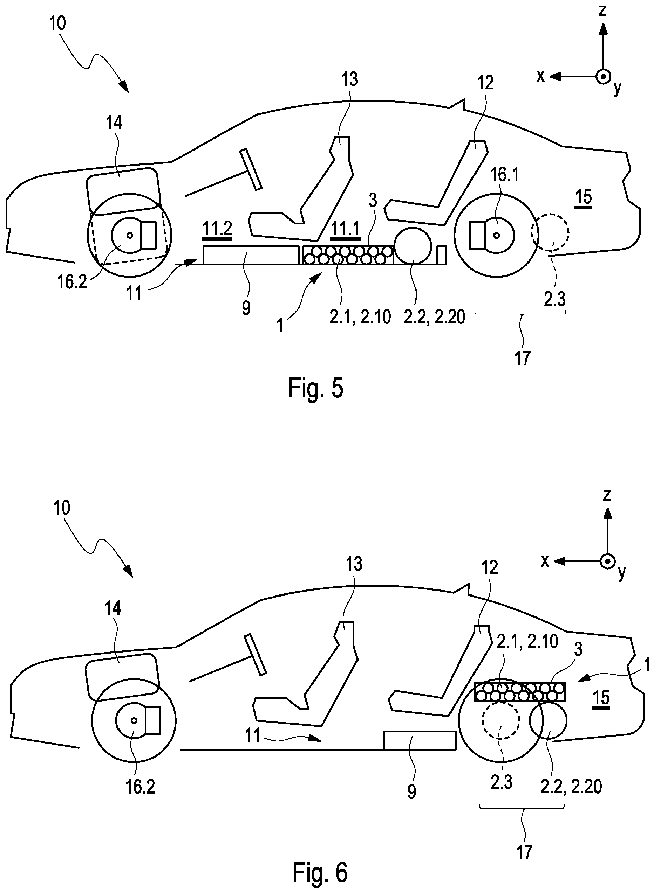

Die Figuren 1 und 2 zeigen eine Speicheranordnung 1 aus einer Kombination eines ersten Druckgasspeichers 2.1 mit einem zweiten Druckgasspeicher 2.2, die eine Baugruppe als Zusammenbauteil zur Montage in einem Fahrzeug 10 (vgl. Figuren 5 bis 8) bilden.

Der erste Druckgasspeicher 2.1 besteht aus einem mäanderförmig verlaufenden Rohrspeicher 2.10, welcher aus zylindrischen Rohrspeicherabschnitten 2.11 besteht, die über bogenförmige Bogenabschnitte 2.12 fluidverbunden sind. Die zylindrischen Rohrspeicherabschnitte 2.11 sind parallel hinsichtlich deren Längsachsen aneinander liegend angeordnet. Gemäß Figur 1 und gemäß Figur 2 sind diese Rohrspeicher 2.10 in zwei Lagen L1 und L2 in einer dichtesten Anordnung in einem Gehäuse 3 angeordnet, welches in den Figuren 1 und 2 lediglich schematisch dargestellt ist. Dieses Gehäuse 3 stellt einen Bauraum zur Verfügung, welcher dem Volumen des ersten Druckgasspeichers 2.1 entspricht, so dass dieser erste Druckgasspeicher 2.1 vollständig von dem Gehäuse 3 aufgenommen ist.

Dieses Gehäuse 3 weist eine äußere Kontur auf, die der geometrischen Körperform des ersten Druckgasspeichers 2.1 entspricht, in diesem Fall stellt diese Körperform ein flacher Quader dar, d. h. ist die Speicheranordnung 1 in einem Fahrzeug (vgl. Figuren 5 bis 8) verbaut, ist die z-Höhe h klein gegenüber den Dimensionen in x- und y-Richtung.

Der zweite Druckgasspeicher 2.2 besteht aus einem zylindrischen Drucktank 2.20 und ist über Verbindungsmittel 4 mit dem Gehäuse 3 kraftschlüssig verbunden. Diese Verbindungsmittel 4 können als schellenartige Befestigungselemente realisiert werden.

Ein solcher Drucktank 2.20 weist im Vergleich zu dem Rohrspeicher 2.10 des ersten Druckgasspeichers 2.1 bei gleicher Länge einen Wesentlichen größeren Durchmesser D auf, d. h. ist die Speicheranordnung 1 in einem Fahrzeug verbaut, ist der Durchmesser D als z-Höhe des Drucktanks 2.20 wesentlich größer als die z-Höhe h des ersten Druckgasspeichers 2.1, wie dies aus den Figuren 1 und 2 ersichtlich ist.

Der Rohrspeicher 2.10 und der Drucktank 22 weisen jeweils ein Ventil auf, die über eine entsprechende Fluidleitung miteinander verbunden sind (in den Figuren 1 und 2 nicht dargestellt).

Die Speicheranordnungen 1 gemäß den Figuren 1 und 2 unterscheiden sich in der Lage des zweiten Druckgasspeichers 2.2 relativ zum ersten Druckgasspeicher 2.1.

In der Speicheranordnung 1 gemäß Figur 1 ist der zylindrische Drucktank 2.20 benachbart zu dem Rohrspeicher 2.10 des ersten Druckgasspeichers 2.1 in der von den zylindrischen Rohrspeicherabschnitte 2.11 gebildeten ersten Lage L1 derart angeordnet, dass eine von der ersten Lage L1 gebildeten Ebene E, die eine tangentiale Ebene der Rohrspeicherabschnitte 2.11 der ersten Lage L1 bildet, auch eine tangentiale Ebene des zylindrischen Drucktanks 2.20 entsprechend von Figur 1 darstellt. Damit ragt der zylindrische Drucktank 2.20 ausgehend von der Ebene E in z-Richtung über das Gehäuse 3 hinaus. Damit ergibt sich eine L-förmige äußere Kontur der Speicheranordnung 1.

Es ist natürlich auch möglich, den Drucktank 2.20 an einer Schmalseite des Gehäuses 3 in der x-y-Ebene so anzuordnen, dass der Drucktank 2.20 in z-Richtung über das Gehäuse 3 in beide Richtungen, also nach oben oder unten hinausragt.

In der Speicheranordnung 1 gemäß Figur 2 ist der zylindrische Drucktank 2.20 benachbart zu dem Rohrspeicher 2.10 derart angeordnet, dass die Kontur der Speicheranordnung 1 ebenso eine L-Form oder winkelförmig ist. Hierbei liegt der zylindrische Drucktank 2.20 an einer der beiden Hauptflächen 3.01 oder 3.02 des flachen quaderförmigen Gehäuses 3, nämlich an der Hauptfläche 3.02 an, wie dies aus Figur 2 ersichtlich ist.

Entgegen der Anordnung des zylindrischen Drucktanks 2.20 im Randbereich der Hauptfläche 3.02 kann dieser auch im mittleren Bereich dieser Hauptfläche 3.02 angeordnet werden, so dass die Kontur der Speicheranordnung 1 eine T-Form annimmt. Ferner kann ein weiterer zylindrischer Drucktank benachbart zum zylindrischen Drucktank 2.20 an der gleichen Hauptfläche 3.02 angeordnet werden, so dass die beiden benachbarten Drucktanks senkrecht zu ihren Längsachse eine der Länge des Gehäuses 3 entsprechende Länge aufweisen und sich dadurch eine quaderförmige äußere Kontur der Speicheranordnung 1 ergibt. Auch dieser weitere Drucktank weist ein Ventil auf, um diesen mit dem Drucktank 2.20 und dem Rohrspeicher 2.10 zu verbinden.

Bei einer Montage einer solchen Speicheranordnung 1 gemäß Figur 2 ergibt sich eine große Einbauhöhe in Fahrzeughochrichtung (z-Richtung) im Bereich des zylindrischen Drucktanks 2.20, die sich aus der Höhe h des Gehäuses 3 in z-Richtung und dem Durchmesser D des Drucktanks 2.20 ergibt.

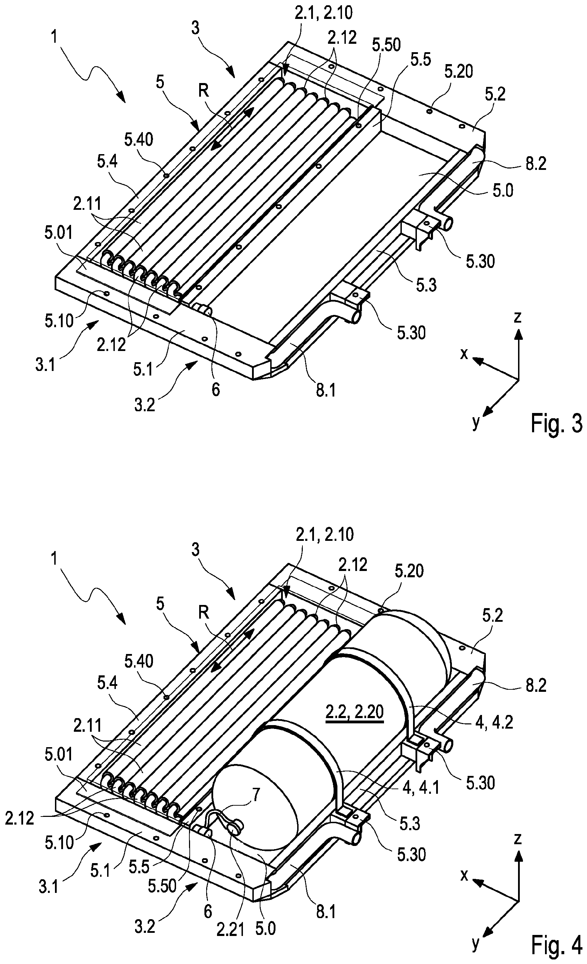

Die Figuren 3 und 4 zeigen ein Ausführungsbeispiel der Erfindung mit einer Speicheranordnung 1, bei welcher der erste Druckgasspeicher 2.1 und der zweite Druckgasspeicher 2.2 entsprechend der Speicheranordnung 1 nach Figur 1 angeordnet sind, wobei in Figur 3 die Speicheranordnung 1 mit einem Gehäuse 3 und lediglich dem ersten Druckgasspeicher 2.1 dargestellt ist.

Gemäß den Figuren 3 und 4 besteht das Gehäuse 3 aus einem mit Profilen 5.1, 5.2, 5.3, 5.4 und 5.5 gebildeten Trägerrahmen 5. Die Profile 5.1 bis 5.4 bilden einen rechteckförmigen Rahmen, welcher durch das Profil 5.5 unter Bildung eines ersten Gehäuseabschnittes 3.1 und eines zweiten Gehäuseabschnittes 3.2 zweigeteilt ist.

Die Zweiteilung des von den Profilen 5.1 bis 5.4 umschlossenen Bauraums mittels des Profils 5.5 erfolgt derart, dass der erste Gehäuseabschnitt 3.1 ein dem Volumen des ersten Druckgasspeichers 2.1 entsprechenden Bauraumvolumen aufweist und somit dieser Druckgasspeicher 2.1 vollständig von dem ersten Gehäuseabschnitt 3.1 des Gehäuses 3 aufgenommen wird.

Der erste Druckgasspeicher 2.1 besteht entsprechend der Darstellung nach Figur 1 aus einem mäanderförmig verbundenen Rohrspeicher 2.10. Dieser Rohrspeichern 2.10 besteht aus zylinderförmigen Rohrspeicherabschnitte 2.11, die in zwei Lagen L1 und L2 (vgl. Figur 1) in dem ersten Gehäuseabschnitt 3.1 angeordnet sind. Die hinsichtlich ihren Längsachsen (Richtungspfeil R) parallel angeordneten Rohrspeicherabschnitte 2.11 sind über bogenförmige Bogenabschnitte 2.12 fluidverbunden.

Die beiden Gehäuseabschnitte 3.1 und 3.2 sind jeweils mit einem Bodenelement 5.0 ausgebildet, so dass jeweils ein muldenförmiger Bauraum entsteht. Der muldenförmige Bauraum des ersten Gehäuseabschnittes 3.1 nimmt den mäanderförmig verlaufenden Rohrspeicher 2.10 auf, wobei die Rohrspeicherabschnitte 2.11 bezüglich ihren Längsachsen entsprechend des Richtungspfeils R in Fahrzeugquerrichtung (y-Richtung) parallel einander liegend und hinsichtlich der beiden Lagen L1 und L2 entsprechend der Darstellung nach Figur 1 mit höchster Packungsdichte angeordnet sind. Der muldenförmige Bauraum des ersten Gehäuseabschnittes 3.1 nimmt den ersten Druckgasspeicher 2.1 vollständig auf, wobei dieser muldenförmige Bauraum mittels eines Deckelelementes 5.01 verschlossen wird, so dass ein geschlossener Bauraum für den ersten Druckgasspeicher 2.1 entsteht.

Der muldenförmige Bauraum des zweiten Gehäuseabschnittes 3.2 dient der Anbindung des zylindrischen Drucktanks 2.20 des zweiten Druckgasspeichers 2.2. Hierzu sind die Profile 5.1 bis 5.4 hinsichtlich ihrer Länge derart ausgeführt, dass die Länge dieses muldenförmigen Bauraums in Längsrichtung der Rohrspeicherabschnitte 2.11 (entsprechend der Richtung des Richtungspfeils R) der Länge des zylindrischen Drucktanks 2.20 des zweiten Druckgasspeichers 2.2 entspricht und daher in diesen muldenförmigen Bauraum parallel hinsichtlich deren Längsachsen abgelegt werden kann. Aufgrund der geringeren z-Höhe der Profile 5.1 bis 5.4 im Vergleich zum Durchmesser D des zylindrischen Drucktanks 2.20 kann nur ein Teilvolumen des Volumens des zylindrischen Drucktanks 2.20 von dem muldenförmigen Bauraum des zweiten Gehäuseabschnittes 3.2 aufgenommen werden. Die Breite dieses muldenförmigen Bauraums des zweiten Gehäuseabschnittes 3.2 senkrecht zur Längsrichtung der Rohrspeicherabschnitte 2.11 entspricht im Wesentlichen dem Durchmesser D des zylindrischen Drucktanks 2.20. Der Drucktank 2.20 ragt daher in z-Richtung über die Profile 5.1 bis 5.4 hinaus.

Mit Schellenelementen 4.1 und 4.2 als Verbindungsmittel 4 wird der zylindrische Drucktank 2.20 mit dem Profil 5.3 des Trägerrahmens 5 kraftschlüssig verbunden.

In dem Profil 5.5 des Trägerrahmens 5 ist ein Ventil 6 vorgesehen, welches eine Fluidverbindung zu dem Rohrspeicher 2.10 ersten Druckgasspeichers 2.1 herstellt. Auch der zylindrische Drucktank 2.20 des zweiten Druckgasspeichers 2.2 weist ein Ventil 2.21 auf. Über eine Fluidleitung 7 sind diese beiden Ventile 6 und 2.21 fluidverbindbar und damit auch der erste und zweite Druckgasspeicher 2.1 und 2.2.

Wird die Speicheranordnung 1 gemäß den Figuren 3 und 4 in einem Brennstoffzellenfahrzeug eingesetzt, müssen die von einem Brennstoffzellensystem bei der Verbrennung von Wasserstoff erzeugten Rückstände (d. h. in diesem Fall Wasser) abgeführt werden. Hierzu sind Abgasrohre 8.1 und 8.2 vorgesehen, die in den in Fahrzeuglängsrichtung (x-Richtung) verlaufenden Profile 5.1 und 5.2 des Trägerrahmens 5 integriert sind, wie dies aus den Figuren 3 und 4 ersichtlich ist.

Die Speicheranordnung 1 gemäß den Figuren 3 und 4 wird über die Profile 5.1, 5.2, 5.4 und 5.5 mit der Karosseriestruktur des Fahrzeugs verbunden. Hierzu weisen diese Profile 5.1, 5.2, 5.4 und 5.5 entsprechende Verbindungslöcher 5.10, 5.20, 5.40 und 5.50 zur Herstellung bspw. einer Schraubverbindung auf. Mit an dem Profil 5.3 angeordneten Laschenelementen 5.30 erfolgt eine weitere Anbindung an die Karosseriestruktur des Fahrzeugs.

Der Rohrspeicher 2.10 der ersten Druckspeichereinheit 2.1 der Speichereinheit 1 gemäß den Figuren 1 bis 4 sind jeweils an den gleichen axialen Enden mittels den bogenförmigen Bogenabschnitten 2.12 fluidverbunden, so dass ein mäanderförmiger Fluidverlauf entsteht. Hierbei wird der Wasserstoff eines zylinderförmigen Rohrspeicherabschnittes 2.11 bspw. der ersten Lage L1 in einen direkt benachbarten Rohrspeicherabschnitt 2.11 der zweiten Lage L2 nach oben und anschließend wieder in einen direkt benachbarten Rohrspeicherabschnitt 2.11 der ersten Lage nach unten usw. geleitet. Die Richtungsangabe "nach oben" und "nach unten" bezieht sich dabei auf die Fahrzeughochrichtung (z-Richtung) im in ein Fahrzeug 10 (vgl. Figuren 5 bis 8) eingebauten Zustand.

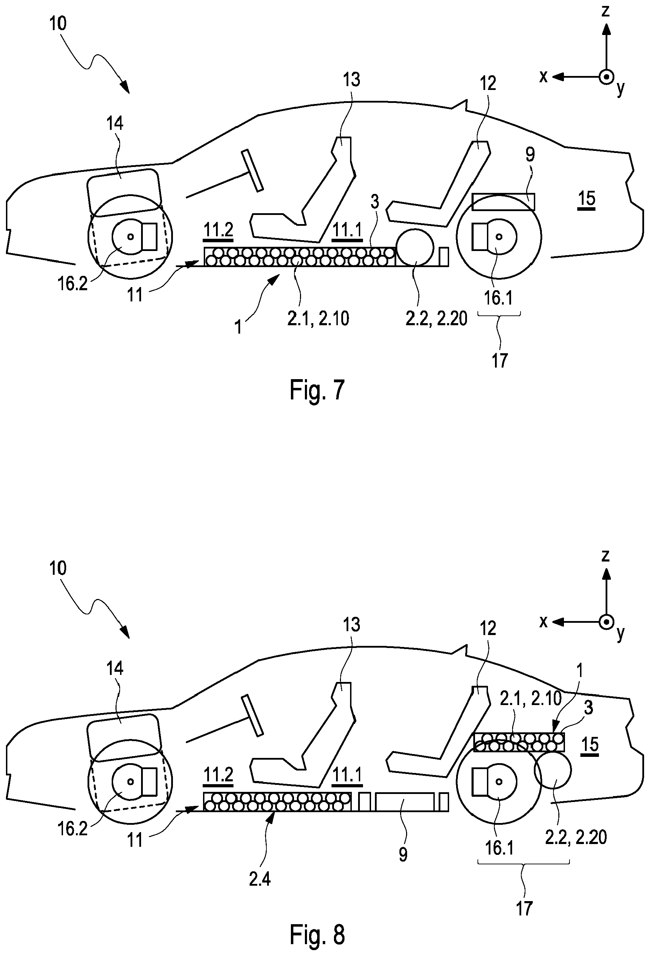

Die Figuren 5, 6, 7 und 8 zeigen eine Seitensilhouette eines bspw. als Brennstoffzellenfahrzeug ausgeführten Fahrzeugs 10 mit einer Rücksitzanordnung 12, Vordersitzen 13 und einer montierten Speicheranordnung 1. Als Brennstoffzellenfahrzeug weist dieses Fahrzeug 10 ein Brennstoffzellensystem 14 sowie einen elektrischen Energiespeicher 9 auf, welcher gemäß in den Figuren 5, 6 und 8 dargestellten Fahrzeugen 10 in einem Unterflur-Raum 11 und nach Figur 7 oberhalb eines in einem Hinterachsbauraum 17 angeordneten Hinterachsantriebs 16.1 verbaut ist.

Gemäß Figur 5 befindet sich dieser Energiespeicher 9 sowohl unterhalb des Fußraums der Vordersitze 13 als auch unter diesen Vordersitzen 13 des Fahrzeugs 10, während gemäß Figur 6 und gemäß Figur 8 der Energiespeicher 9 unterhalb der Rücksitzanordnung 12 des Fahrzeugs 10 liegt.

In das Fahrzeug 10 gemäß Figur 5 ist eine Speicheranordnung 1 nach Figur 4 derart verbaut, dass der Bereich des ersten Gehäuseabschnittes 3.1 des Gehäuses 3 mit dem ersten Druckgasspeicher 2.1 im Unterflur-Raum 11 unterhalb des Fußraums 11.1 vor der Rücksitzanordnung 12 liegt, während der Bereich des zweiten Gehäuseabschnittes 3.2 mit dem zweiten Druckgasspeicher 2.2 unterhalb der Rücksitzanordnung 12 liegt. Damit befindet sich der zylindrische Drucktank 2.20 des zweiten Druckgasspeichers 2.2 in Fahrzeughochrichtung (z-Richtung) direkt unter der Rücksitzanordnung 12.

Dieses Fahrzeug 10 gemäß Figur 5 kann mit einem elektrischen Hinterachsantrieb 16.1 und einem elektrischen Vorderachsantrieb 16.2 oder als Fahrzeug 10 mit nur einem elektrischen Hinterachsantrieb 16.1 oder nur mit einem elektrischen Vorderachsantrieb 16.2 ausgeführt werden. Bei einem Fahrzeug mit nur einem elektrischen Hinterachsantrieb 16.1 wird das Brennstoffzellensystem 14 (gestrichelt dargestellt) größer und damit leistungsstärker ausgeführt.

Bei diesem Fahrzeug 10 gemäß Figur 5 mit einem elektrischen Hinterachsantrieb 16.1 kann zusätzlich als Mehrausstattung ein weiterer zylindrischer Drucktank 2.3 (gestrichelt dargestellt) hinter diesen Hinterachsantrieb 16.1 des Fahrzeugs 10 angeordnet werden. Ist das Fahrzeug 10 anstelle des Hinterachsantriebs 16.1 mit einem elektrischen Vorderachsantrieb 16.2 ausgestattet, kann dieser weitere zylindrische Drucktank 2.3 an die Position des Hinterachsantriebs 16.1 angeordnet werden.
Anstelle des elektrischen Energiespeichers 9 des Fahrzeugs 10 gemäß Figur 5 kann auch ein weiterer Druckgasspeicher mit einem mäanderförmig verlaufenden Rohrspeicher in einem Gehäuse 3 gemäß Figur 1 (allerdings ohne den zweiten Druckgasspeicher 2.2) verbaut werden. In diesem Fall kann der elektrische Energiespeicher 9 oberhalb des Hinterachsantriebs 16.1 entsprechend des Fahrzeugs 10 nach Figur 6 verbaut werden.

Mit dieser Anordnung der als kompakte Baueinheit aus dem ersten und zweiten Druckgasspeicher 2.1 und 2.2 aufgebauten Speicheranordnung 1 im Unterflur-Raum 11 des Fahrzeugs 10 im Bereich von dessen Rücksitzanordnung 12 wird der flache Bauraum des Unterflur-Raums 11 im Bereich des Fußraums 11.1 und gleichzeitig der hohe Bauraum bezüglich der Fahrzeughochrichtung (z-Richtung) unterhalb des Sitzteils der Rücksitzanordnung 12 optimal ausgenutzt.

Bei dem bspw. ebenso als Brennstoffzellenfahrzeug ausgeführten Fahrzeug 10 gemäß Figur 6 mit einer elektrischen Maschine als Vorderachsantrieb 16 ist eine Speicheranordnung 1 mit einer L-förmigen äußeren Kontur gemäß Figur 2 verbaut. Diese Speicheranordnung 1 ist in dem Fahrzeug 10 derart verbaut, dass der Drucktank 2.20 des zweiten Druckgasspeichers 2.2 im Bereich eines Hinterachsbauraum 17 des Fahrzeugs in einer Position befindet, an der ein Hinterachsantrieb angeordnet wäre und der Rohrspeicher 2.10 des ersten Druckgasspeichers 2.1 der Speicheranordnung 1 sich in Fahrzeughochrichtung gesehen oberhalb des Drucktanks 2.20 befindet.
Bei diesem Fahrzeug 10 gemäß Figur 6 kann zusätzlich als Mehrausstattung ein weiterer zylindrischer Drucktank 2.3 in den Hinterachsbauraum 17 des Fahrzeugs 10 an einer Position integriert werden, in welcher ein Hinterachsantrieb angeordnet wäre. Eine solche Speicheranordnung 1 mit einem ersten Druckgasspeicher 2.1 und einen mit zwei Drucktanks 2.20 und 2.3 ausgeführten zweiten Druckgasspeicher 2.2 weist eine quaderförmige äußere Kontur auf.
Das Fahrzeug 10 gemäß Figur 7 ist mit einem elektrischen Hinterachsantrieb 16.1 und einem elektrischen Vorderachsantrieb 16.2 ausgeführt. Eine entsprechend von Figur 4 ausgeführte Speicheranordnung 1 ist im Unterflur-Raum 11 des Fahrzeugs 10 derart angeordnet, dass sich der Bereich des ersten Druckgasspeichers 2.1 von unterhalb des Fußraums 11.2 der Vordersitze 13 bis in den Bereich unterhalb des Fußraums 11.1 der Rücksitzanordnung 12 erstreckt und der Bereich des zweiten Druckgasspeichers 2.2 unterhalb der Rücksitzanordnung 12 liegt. Damit befindet sich der zylindrische Drucktank 2.20 des zweiten Druckgasspeichers 2.2 in Fahrzeughochrichtung (z-Richtung) direkt unter der Rücksitzanordnung 12.

Das Fahrzeug 10 gemäß Figur 7 kann auch nur mit einem elektrischen Hinterachsantrieb 16.1 ausgestattet werden, wobei in diesem Fall ein größeres und damit leistungsstärkeres Brennstoffzellensystem eingesetzt wird (gestrichelt dargestellt).

Das Fahrzeug 10 gemäß Figur 8 ist mit einem elektrischen Hinterachsantrieb 16.1 und einem elektrischen Vorderachsantrieb 16.2 ausgeführt. Eine entsprechend von Figur 2 ausgeführte Speicheranordnung 1 ist im Hinterwagen des Fahrzeugs 10 derart angeordnet, dass sich der erste Druckgasspeicher 2.1 oberhalb des Hinterachsantriebs 16.1 und der zweite Druckgasspeicher 2.1 hinter diesem Hinterachsantrieb 16.1 befindet. Diese Anordnung der Speicheranordnung 1 in diesem Fahrzeug 10 gemäß Figur 8 entspricht derjenigen des Fahrzeugs 10 nach Figur 6.

Im Unterflur-Raum 11 des Fahrzeugs 10 gemäß Figur 8 ist ein weiterer Druckgasspeicher 2.4 sowie der elektrische Energiespeicher 9 derart verbaut, dass sich der Druckgasspeicher 2.4 von unterhalb des Fußraums 11.2 der Vordersitze 13 bis unter die Vordersitze 13 erstreckt, wobei sich rückwärtig an diesen Druckgasspeicher 2.4 der elektrische Energiespeicher 9 bis unterhalb der Rücksitzanordnung 12 anschließt.

Alternativ kann dieses Fahrzeug 10 gemäß Figur 8 auch nur mit einem Hinterachsantrieb 16.1 ausgeführt werden, wobei in diesem Fall ein größeres und leistungsstärkeres Brennstoffzellensystem 14 (gestrichelt dargestellt) eingesetzt wird.

Bei den Fahrzeugen 10 gemäß den Figuren 5 bis 8 ist die Speicheranordnung 1 in diesen Fahrzeugen derart verbaut, dass sowohl die zylindrischen Rohrspeicherabschnitte 2.11 als auch der Drucktank 2.20 parallel zur Fahrzeugquerrichtung (y-Richtung) ausgerichtet sind. Es ist natürlich auch möglich, dass die zylindrischen Rohrspeicherabschnitte 2.11 in Fahrzeuglängsrichtung (x-Richtung) in dem Fahrzeug 10 angeordnet sind.
Die Fahrzeuge 10 gemäß den Figuren 5 bis 8 können auch als Fahrzeuge mit Gasmotoren ausgeführt sein, wobei in diesem Fall die ersten und zweiten Druckgasspeicher 2.1 und 2.2 als CNG-Druckgasspeicher ausgeführt sind.

### BEZUGSZEICHEN:

- 1: Speicheranordnung des Fahrzeugs 10

- 2.1: erster Druckgasspeicher
- 2.10: Rohrspeicher des ersten Druckgasspeichers 2.1
- 2.11: zylindrischer Rohrspeicherabschnitt des Rohrspeichers 2.10
- 2.12: bogenförmiger Bogenabschnitt des Rohrspeichers 2.10
- 2.2: zweiter Druckgasspeicher
- 2.20: Drucktank des zweiten Druckgasspeichers 2.2
- 2.21: Ventil des Drucktanks 2.20
- 2.3: Drucktank
- 2.4: Druckgasspeicher

- 3: Gehäuse der Speicheranordnung 1
- 3.01: Hauptfläche des Gehäuses 3
- 3.02: Hauptfläche des Gehäuses 3
- 3.03: Seitenfläche des Gehäuses 3
- 3.04: Seitenfläche des Gehäuses 3
- 3.1: erster Gehäuseabschnitt des Gehäuses 3
- 3.2: zweiter Gehäuseabschnitt des Gehäuses 3

- 4: Verbindungsmittel
- 4.1: Schellenelement
- 4.1: Schellenelement

- 5: Trägerrahmen
- 5.0: Bodenelement des Trägerrahmens 5
- 5.01: Deckelelement des Trägerrahmens 5
- 5.1: Profil des Trägerrahmens 5
- 5.10: Verbindungsloch des Profils 5.1
- 5.2: Profil des Trägerrahmens 5
- 5.20: Verbindungsloch des Profil 5.2
- 5.3: Profil des Trägerrahmens 5
- 5.30: Laschenelement des Profils 5.3
- 5.4: Profil des Trägerrahmens 5
- 5.40: Verbindungloch des Profils 5.4
- 5.5: Profil Trägerrahmens 5
- 5.50: Verbindungsloch des Profils 5.5

- 6: Ventil des ersten Druckgasspeichers 2.1
- 7: Fluidleitung
- 8.1: Abgasrohr
- 8.2: Abgasrohr
- 9: elektrischer Energiespeicher

- 10: Fahrzeug
- 11: Unterflur-Raum des Fahrzeugs 10
- 11.1: Fußraum der Rücksitzanordnung 12
- 11.2: Fußraum der Vordersitze 13

- 12: Rücksitzanordnung des Fahrzeugs 10
- 13: Vordersitz des Fahrzeugs 10
- 14: Brennstoffzellensystem des Fahrzeugs 10

- 16.1: elektrischer Hinterachsantrieb
- 16.2: elektrischer Vorderachsantrieb
- 17: Hinterachsbauraum

- E: Ebene
- L1: erste Lage der Rohrspeicher 2.10
- L2: zweite Lage der Rohrspeicher 2.10
- R: Richtungspfeil

## Patentansprüche

1. Speicheranordnung (1) für ein Fahrzeug (10) zum Speichern und Abgeben eines Druckgases mit:
- einem ersten Druckgasspeicher (2.1) mit einem mäanderförmig verlaufenden Rohrspeicher (2.10), welcher aus miteinander fluidverbundenen zylindrischen Rohrspeicherabschnitten (2.11) gebildet ist,
- einem zweiten Druckgasspeicher (2.2) mit wenigstens einem zylindrischen Drucktank (2.20),
- einem Gehäuse (3), innerhalb welchem der erste Druckgasspeicher (2.1) angeordnet ist, und
- wenigstens einem Verbindungsmittel (4), mit welchem der zweite Druckgasspeicher (2.2) mit dem Gehäuse (3) kraftschlüssig verbunden ist.

2. Speicheranordnung (1) nach Anspruch 1, bei welcher
- die Rohrspeicherabschnitte (2.11) des Rohrspeichers (2.10) in wenigstens einer ersten Lage (L1) mit parallel verlaufenden Längsachsen ausgerichtet sind, und
- der zylindrische Drucktank (2.20) des zweiten Druckgasspeichers (2) benachbart zu dem Rohrspeicher (2.10) des ersten Druckgasspeichers (2.1) in dessen ersten Lage (L1) angeordnet ist.

3. Speicheranordnung (1) nach Anspruch 1 oder 2, bei welcher
- das Gehäuse (3) mindestens in einen ersten und zweiten Gehäuseabschnitt (3.1, 3.2) zweigeteilt ist,
- zur Anordnung des ersten Druckgasspeichers (2.1) in dem ersten Gehäuseabschnitt (3.1) derselbe mit einem dem Volumen des ersten Druckgasspeichers (2.1) entsprechenden Bauraumvolumen ausgebildet ist,
- der zweite Gehäuseabschnitt (3.2) mit einem Bauraumvolumen ausgebildet ist, welcher höchstens einem Teilvolumen des Volumens des zylindrischen Drucktanks (2.20) des zweiten Druckgasspeichers (2.2) entspricht, und
- der zylindrische Drucktank (2.20) des zweiten Druckgasspeichers (2.2) mit dessen Teilvolumen in dem zweiten Gehäuseabschnitt (3.2) angeordnet ist.

4. Speicheranordnung (1) nach einem der vorhergehenden Ansprüche, bei welcher das Gehäuse (3) einen mit Profilen (5.1, 5.2, 5.3, 5.4, 5.5) gebildeten Trägerrahmen (5) aufweist.

5. Speicheranordnung (1) nach Anspruch 3 oder 4, bei welcher die Verbindungsmittel (4) ausgebildet sind, den zylindrischen Drucktank (2.20) des zweiten Druckgasspeichers (2.2) mit dem Gehäuse (3) im Bereich des zweiten Gehäuseabschnittes (3.2) kraftschlüssig zu verbinden.

6. Speicheranordnung (1) nach einem der vorhergehenden Ansprüche, bei welcher das Gehäuse (3) im Bereich des ersten Gehäuseabschnittes (3.1) eine der äußeren Kontur des ersten Druckgasspeichers (2.1) entsprechende geometrische Körperform aufweist.

7. Speicheranordnung (1) nach einem der vorhergehenden Ansprüche, bei welcher
- der Rohrspeicher (2.10) des ersten Druckgasspeichers (2.1) ein Ventil (6) aufweist,
- der wenigstens eine Drucktank (2.2) des zweiten Druckgasspeichers (2.2) ein Ventil (2.21) aufweist, und
- das Ventil (6) des Rohrspeichers (2.10) mittels eines Verbindungsmittels (7) mit dem Ventil (2.21) des wenigstens einen Drucktanks (2.2) fluidverbunden ist.

8. Speicheranordnung (1) nach Anspruch 1, bei welcher der zweite Druckgasspeicher (2.2) derart benachbart zu dem Rohrspeicher (2.10) des ersten Druckgasspeichers (2.1) angeordnet ist, dass die äußere Kontur der Speicheranordnung (1) eine L-Form ist.

9. Speicheranordnung (1) nach Anspruch 1, bei welcher der zweite Druckgasspeicher (2.2) mit wenigstens zwei Drucktanks (2.20, 2.3) derart benachbart zu dem Rohrspeicher (2.10) des ersten Druckgasspeichers (2.1) angeordnet ist, dass die äußere Kontur der Speicheranordnung (1) quaderförmig ist.

10. Speicheranordnung (1) nach Anspruch 8 oder 9, bei welcher
- zur Anordnung des ersten Druckgasspeichers (2.1) in dem Gehäuse (3) das Gehäuse (3) mit einem dem Volumen des ersten Druckgasspeichers (2.1) entsprechenden Bauraumvolumen ausgebildet ist, und
- die Verbindungsmittel (4) ausgebildet sind, den zylindrischen Drucktank (2.20) oder die beiden zylindrischen Drucktanks (2.20, 2.3) des zweiten Druckgasspeichers (2.2) mit dem Gehäuse (3) zu verbinden.

11. Speicheranordnung (1) nach einem der Ansprüche 7 bis 10, bei welcher das Gehäuse (3) eine der äußeren Kontur des ersten Druckgasspeichers (2.1) entsprechende geometrische Körperform aufweist.

12. Speicheranordnung (1) nach einem der Ansprüche 7 bis 11, bei welcher das Gehäuse (3) einen mit Profilen gebildeten Trägerrahmen aufweist.

13. Fahrzeug (10) mit einem Unterflur-Raum (11) und einer Speicheranordnung (1) nach einem der Ansprüche 1 bis 7, bei welchem die Speicheranordnung (1) im Unterflur-Raum (11) derart angeordnet ist, dass der erste Druckgasspeicher (2.1) der Speicheranordnung (1) zumindest unterhalb des Fußraums (11.1) einer Rücksitzanordnung (12) und der zweite Druckgasspeicher (2.2) unterhalb der Rücksitzanordnung (12) ist.

14. Fahrzeug (10) nach Anspruch 13, bei welchem der erste Druckgasspeicher (2.1) von unterhalb des Fußraums (11.2) von Vordersitzen (13) bis unterhalb des Fußraums (11.1) der Rücksitzanordnung (12) angeordnet ist.

15. Fahrzeug (10) mit einer Speicheranordnung (1) nach einem der Ansprüche 1 oder 8 bis 12, bei welchem die Speicheranordnung (1) derart angeordnet ist, dass der Rohrspeicher (2.10) des ersten Druckgasspeichers (2.1) der Speicheranordnung (1) oberhalb eines elektrischen Hinterachsantriebs (16.1) des Fahrzeugs (10) und der Drucktank (2.20) des zweiten Druckgasspeichers (2.2) hinter dem elektrischen Hinterachsantrieb (16.1) ist.

16. Fahrzeug (10) nach Anspruch 15, bei welchem
- das Fahrzeug (10) anstelle des elektrischen Hinterachsantriebs (16.1) einen elektrischen Vorderachsantrieb (16.2) aufweist, und
- anstelle des elektrischen Hinterachsantriebs (16.1) ein weiterer Drucktank (2.3) des zweiten Druckgasspeichers (2.2) vorgesehen ist.

17. Fahrzeug (10) nach einem der Ansprüche 13 bis 16, bei welchem die zylindrischen Rohrspeicherabschnitte (2.11) des Rohrspeichers (2.10) des ersten Druckgasspeichers (2.1) mit ihrer Längsachse (R) parallel zur Fahrzeugquerachse (y-Richtung) oder parallel zur Fahrzeuglängsachse (x-Richtung) angeordnet sind, während der wenigstens eine Drucktank (2.20) des zweiten Druckgasspeichers (2.2) mit seiner Längsachse in Fahrzeugquerrichtung (y-Richtung) angeordnet ist.
